# EUROPÄISCHE PATENTSCHRIFT

(11) **EP 2 765 223 B1**
(45) Veröffentlichungstag und Bekanntmachung des Hinweises auf die Patenterteilung: **12.07.2017**
(21) Anmeldenummer: 14153902.3
(22) Anmeldetag: 05.02.2014
(51) Int. Cl.: C25B 11/04, C25B 1/34, C25B 1/26, H01M 4/92, H01M 4/90

(54) **Elektrokatalysator, Elektrodenbeschichtung und Elektrode zur Herstellung von Chlor**
Electrocatalyst, electrode coating and electrode for the production of chlorine
Catalyseur électrique, revêtement d'électrode et électrode pour la fabrication de chlore

(30) Priorität: 08.02.2013 DE 102013202144
(43) Veröffentlichungstag der Anmeldung: 13.08.2014
(73) Patentinhaber: Covestro Deutschland AG, 51373 Leverkusen (DE); Nano-X GmbH, 66130 Saarbrücken (DE)
(72) Erfinder: Kintrup, Jürgen, 51373 Leverkusen (DE); Bulan, Andreas, 40764 Langenfeld (DE); Hammarberg, Elin, 66119 Saarbrücken (DE); Sepeur, Stefan, 66787 Wadgassen (DE); Frenzer, Gerald, 66130 Saarbrücken-Fechingen (DE); Gross, Frank, 66663 Merzig (DE); Eiden, Stefanie, 51371 Leverkusen (DE)
(74) Vertreter: Levpat

(56) Entgegenhaltungen:
- DE-A1- 2 245 709
- KR-A- 20040 096 203

## Beschreibung

Die Erfindung geht aus von bekannten mit Katalysatoren beschichteten Elektroden und Elektrodenbeschichtungen für Elektrolyseverfahren zur Herstellung von Chlor.

Die Erfindung betrifft neue Katalysatoren, Elektrodenbeschichtungen und Elektroden zur Herstellung von Chlor. Chlor wird technisch üblicherweise durch Elektrolyse von Natriumchlorid oder Salzsäure oder durch Gasphasenoxidation von Chlorwasserstoff hergestellt (Schmittinger, Chlorine, Wiley-VCH 1999, Seite 19-27). Werden Elektrolyseverfahren eingesetzt, so wird das Chlor an der Anode erzeugt. Als Anodenwerkstoff wird dabei meist Titan als Elektrodenwerkstoff eingesetzt, auf dessen Oberfläche sich ein elektrochemisch aktiver Katalysator befindet. Die Schicht auf der Oberfläche, die den Katalysator enthält, wird üblicherweise auch als Coating, im folgenden auch Beschichtung genannt, bezeichnet. Aufgaben des Katalysators sind die Herabsetzung der Überspannung und die Vermeidung der Sauerstoffentwicklung an der Anode (Winnacker-Küchler, Chemische Technik, Prozesse und Produkte, 5. Auflage, Wiley-VCH 2005, Seite 469-470).

Bei der Herstellung von Chlor durch Elektrolyse von Salzsäure werden Graphitanoden eingesetzt (Winnacker-Küchler, Chemische Technik, Prozesse und Produkte, 5. Auflage, Wiley-VCH 2005, Seite 514). Bei der Salzsäure-Elektrolyse, bei der beispielsweise auf der Kathodenseite eine Gasdiffusionselektrode eingesetzt wird, können Titan-Anoden eingesetzt werden, die edelmetallbasierte Katalysatoren im Coating besitzen (Winnacker-Küchler, Chemische Technik, Prozesse und Produkte, 5. Auflage, Wiley-VCH 2005, Seite 515).

Elektroden für Elektrolyse-Prozesse basieren üblicherweise auf einem Metall, das zu den sogenannten Ventil-Metallen gehört. Unter Ventil-Metallen werden z.B. die Metalle Titan, Zirkon, Wolfram, Tantal und Niob verstanden. Diese wirken aufgrund von Oxidschichten auf der Metalloberfläche als Diodenmaterial für elektrischen Strom.

Auf der Oberfläche der Ventilmetalle wird für die Anwendung in der Elektrolyse üblicherweise ein elektrokatalytisch aktiver Katalysator bestehend aus einem Edelmetall und/oder dessen Metalloxid aufgebracht, wobei auch gegebenenfalls zusätzlich Oxide des Ventilmetalls im Metalloxid enthalten sein können (WO 200602843 (ELTECH), BECK, Electrochimica Acta, Vol. 34, No. 6. Seiten 811-822, 1989)). Das Oxid bildende Edelmetall gehört üblicherweise zu den Platinmetallen, wie z.B. Iridium, Ruthenium, Rhodium, Palladium, Platin oder Mischungen daraus. Üblicherweise werden solche Elektroden als DSA-Elektroden bezeichnet, wobei DSA für "dimensionally stable anode" steht.

Nachteile dieser bekannten Elektroden bei Einsatz in halogenid-haltigen Elektrolyten, sind der noch hohe Überspannungsanteil für die Chlor-Abscheidung, die Neigung der Elektroden trotzdem Sauerstoff zu entwickeln, die hohe Elektrolysespannung und der hohe Bedarf an kostenträchtigem Edelmetall zur Herstellung der Beschichtung. All diese Faktoren haben eine negative Auswirkung auf die Wirtschaftlichkeit des bekannten Elektrolyseverfahrens unter Verwendung solcher Elektroden.

Von den Beschichtungen aus dem Stand der Technik ist ferner bekannt (DE 602005002661 T2), dass unter Elektrolysebedingungen mit der Zeit die Edelmetalle aus der Beschichtung eluiert werden, es liegt demnach keine ausreichende dauernde Korrosionsbeständigkeit vor. Die Notwendigkeit der Korrosionsbeständigkeit wird dadurch deutlich, dass der Verlust der edelmetallhaltigen Beschichtung dazu führt, dass das Elektrodenmetall, üblicherweise das Ventilmetall, direkt mit dem Elektrolyten in Kontakt kommt und ein Oxid auf seiner Oberfläche bildet, das nicht elektrisch leitend ist. Für den laufenden Elektrolyseprozess bedeutet dies, dass an dieser Oberfläche keine elektrochemischen Prozesse mehr stattfinden, was einen Totalausfall der Elektrolysezelle mit den entsprechenden negativen wirtschaftlichen Folgen nach sich ziehen kann.

Weiterhin wird bei Einsatz eines Elektrolyseurs mit edelmetallhaltigen DSA-Elektroden in chloridhaltigen Lösungen zur Herstellung von Chlor beobachtet, dass die Nebenreaktion der Sauerstoffbildung nicht vollständig unterdrückt werden kann, wodurch Sauerstoff im Produktgas Chlor gefunden wird. Der Sauerstoffanteil bedingt einen erhöhten Reinigungsaufwand für das Chlorgas und hat dadurch ebenfalls negative Auswirkungen auf die Wirtschaftlichkeit der Elektrolyse. Die vermehrte Bildung von Sauerstoff wird besonders dann deutlich sichtbar, wenn die Chlorid-Konzentration im Elektrolyten sinkt, im Falle der Elektrolyse von Kochsalzlösungen besonders bei einer Konzentration unter 200 g/l NaCl, und wenn die Stromdichte erhöht wird, besonders oberhalb einer Stromdichte von 5 kA/m².

Weiterhin beeinträchtigt der alleinige Einsatz von Edelmetallen als katalytisches Elektrodenmaterial durch deren hohen Preis und deren schwindende Verfügbarkeit am Weltmarkt ebenfalls die Wirtschaftlichkeit bekannter Elektroden.

Aus der Literatur sind verschiedene Ansätze zur Herstellung von Komposit-Elektroden zum Ersatz oder zur Reduzierung des Edelmetallanteils bekannt.

So hat es Versuche gegeben, Kohlenstoff-haltige Beschichtungen für Elektroden in elektrochemischen Prozessen einzusetzen. Beispielsweise können Diamant-haltige Beschichtungen durch CVD-Verfahren (chemical vapour deposition) auf Elektroden aufgebracht werden. Bei der Elektrolyse in schwefelsaurem Natriumsulfat-Anolyten ist die Beschichtung nicht beständig und platzt ab. Weiterhin wies die Beschichtung Defekte auf, so dass das Elektrodenmetall einem elektrochemischem Korrosionsangriff ausgesetzt war. (AiF Förderprojekt 85 ZN, 2003 bis 2005, Schlussbericht für den Zeitraum 1.01.2003 bis 31.03.2005 "Entwicklung und Qualitätssicherung stabiler Diamant-beschichteter Elektroden für neuartige elektrochemische Prozesse"). Das Forschungsvorhaben wurde wegen Nichterreichung des technischen Ziels eingestellt.

Feinteilige, Kohlenstoff-Modifikationen enthaltende Katalysatoren auf Elektroden zur Herstellung von Chlor sind aus DE102009035546A1 bekannt. Ein grundsätzlicher Nachteil Kohlenstoff haltiger Elektroden besteht darin, dass Kohlenstoff hinsichtlich einer Oxidation thermodynamisch nicht stabil ist. So ist unter anodischen Elektrolysebedingungen unter Einwirkung von Sauerstoff, der immer auch als Nebenprodukt jeder in wässrigem Elektrolyt durchgeführter Elektrolyse anfällt, grundsätzlich die Bildung flüchtiger Kohlenstoff-Sauerstoff-Spezies, insbesondere Kohlendioxid, Kohlenmonoxid, Kohlensäure, Hydrogencarbonat oder Carbonat möglich. Weiterhin können sich bei der anodischen Chlorherstellung auch Kohlenstoff-Chlor-Verbindungen wie z. B. Tetrachlorkohlenstoff bilden. Bei Verlust der Kohlenstoff-Komponente aus Komposit-Elektroden verringert sich die mechanische Stabilität und die Lebensdauer solcher Elektroden beträchtlich. Bei reinen Kohlenstoff-Elektroden, wie sie früher beispielsweise in der Chlorherstellung durch Elektrolyse nach dem Amalgamverfahren eingesetzt wurden, führt ein Abbrand zu vergrößertem Elektrodenabstand und erhöhtem Energiebedarf und ebenfalls zur verringerten Lebensdauer der Elektrode.

Auch wenn in DE102009035546A1 beschriebene Katalysatoren bei Natriumchlorid-Konzentrationen unterhalb von 200 g/l eingesetzt wurden, sind diese Kohlenstoff-haltigen Elektroden immer noch unbeständig im Falle von Störungen (beispielsweise der Soleversorgung der Elektrolysezellen) oder Fehlbedienungen (wie beispielsweise ein Einschalten einer Zelle in mit Wasser gespültem Zustand), was die praktische Anwendbarkeit im Vergleich zu Kohlenstoff-freien dimensionsstabilen Anoden (DSA) nach dem Stand der Technik stark einschränkt.

Der Einsatz nichtwässriger Elektrolyse könnte eine Sauerstoffentwicklung an Kohlenstoff-haltigen Elektroden als Nebenreaktion zwar vermeiden, hat aber andere Nachteile, z. B. bei organischen Lösungmitteln deren Unbeständigkeit gegenüber Chlor, oder die geringe Ionenleitfähigkeit solcher Lösungen, die letztendlich einen höheren Energiebedarf zur Folge hat. Der bekannte Einsatz von anderen wasserfreien Systemen wie Salzschmelzen erfordert eine vergleichsweise hohe Betriebstemperatur, die nur sehr aufwändig realisiert werden kann und die sich verglichen mit wässrigen Lösungsmitteln als nicht wirtschaftlich erwiesen hat. Weiterhin ist die Stabilität von Elektroden und Zellmaterialien unter sehr hohen Temperaturen immer noch eine Herausforderung und limitiert die Lebensdauer entsprechender Elektrolyseanlagen.

Weiterhin ist die Herstellung der in DE102009035546A1 genannten Kohlenstoff-Modifikationen wie Diamant und Fulleren technisch schwierig und wirtschaftlich mit hohem Aufwand verbunden, so dass diese Materialien in technisch erforderlichen Mengen und in gleichbleibender Qualität oft nicht zur Verfügung stehen.

Aus DE2245709A1 sind Elektroden bekannt, deren elektrokatalytisch aktiver Belag aus einer Matrix eines elektrisch leitenden Materials mit elektrokatalytischen Eigenschaften besteht, in die ein nichtleitendes teilchenförmiges oder faserförmiges feuerfestes Material eingebettet ist. Dadurch wird die Widerstandsfähigkeit durch Beschädigung gegen Kurzschluss bei Einsatz als Anode in Kombination mit einer Quecksilberkathode verbessert. Bezüglich des Stromverbrauchs oder der Überspannung unterscheiden sich die faserhaltigen Elektroden (s. Bsp. 1 und 3 in DE2245709A1) nicht von analog hergestellten faserfreien Elektroden, oder weisen bei Einsatz von teilchenförmigen Stoffen (Bsp. 2 in DE2245709A1) eine gegenüber Bsp. 1 deutlich erhöhte Überspannung auf. Unter Aspekten des Strahlenschutzes ist das im Beispiel 2 genannte Thoriumoxid weiterhin wegen seiner Radioaktivität in kommerziellen Elektrolyseanlagen unerwünscht.

Die DE 2 245 709 A1 offenbart keinen vergleichbaren Elektrokatalysator mit den vorliegenden Merkmalen. Insbesondere ist der besondere Aufbau des neuen Katalysators mit einer elektrisch leitfähigen Matrix aus Edelmetall-Oxid und/oder Edelmetall, Ventilmetall-Oxid und/oder Ventilmetall und/oder dotiertem Nicht-Edelmetall-Oxid aufweist, in der das feinteilige ggf. dotierte Nicht-Edelmetall-Oxid-Pulver eingebettet ist und wobei der mittlere Partikeldurchmesser der Partikel des Nicht-Edelmetall-Oxid-Pulvers von 5 bis 800 nm beträgt aus Dokument D1 nicht zu entnehmen.

Auch aus dem Dokument KR 10 2004 0096 203 A ist das letztgenannte Merkmal des Aufbaus eines Elektrokatalysators aus einer elektrisch leitfähigen Matrix und eingebettetem Nicht-Edelmetall-Oxid-Pulver nicht offenbart.

Außerdem beschreibt KR 10 2004 0096 203 A keinen inerten Elektrokatalysator, sondern ein Elektrodenmaterial, das an Lade- und Entladevorgängen teilnimmt. Einem solchen Material fehlt es aber an der wesentlichen Voraussetzung, dass die Elektrode ein Nicht-Edelmetall-Oxid-Pulver aufweist, das unter Einfluss von Elektrolyt stabil bleibt.

Es bestand daher die Aufgabe, einen Katalysator zu finden, mit dem die Elektrolyse von Chloridhaltigen wässrigen Lösungen bei niedriger Elektrolysespannung, auch bei niedriger Chlorid-Konzentration durchführbar ist sowie der Anteil von Edelmetall reduziert ist. Weitere Aufgabe war eine elektrokatalytische Beschichtung zu finden, die fest auf dem Basismetall haftet und chemisch sowie elektrochemisch nicht angegriffen wird und mindestens die gleiche Wirksamkeit wie bekannte Beschichtungen aufweist. Ebenfalls sollte ein chemisch beständiger, edelmetallarmer und preiswerter Katalysator für die Chlorwasserstoff-Gasphasen-Oxidation zur Verfügung gestellt werden.
Überraschenderweise wurde gefunden, dass neue feinteilige Nicht-Edelmetall-Oxid-Pulver enthaltende Katalysatoren auf Elektroden zur Herstellung von Chlor unter Absenkung der Überspannung bzw. Aktivierungsenergie eingesetzt werden können, wobei die katalytisch aktive Schicht aus Nicht-Edelmetall-Oxid-Pulver sowie wenigstens einem Edelmetall der Platinmetalle und/oder dessen Oxid oder Mischungen davon besteht. Weiterhin kann der Katalysator zusätzlich ein Ventilmetall und/oder dessen Oxid oder deren Mischung enthalten und/oder wenigstens ein weiteres dotiertes Nicht-Edelmetall-Oxid enthalten.
Gegenstand der Erfindung ist ein Elektrokatalysator zur Herstellung von Chlor mittels Elektrolyse von Chlor-Ionen enthaltenden Elektrolyten, auf Basis wenigstens eines Edelmetalloxids und/oder Edelmetalls der Nebengruppe: VIIIa des periodischen Systems der Elemente, insbesondere ausgewählt aus der Reihe: Ru, Rh, Pd, Os, Ir und Pt, dadurch gekennzeichnet, dass der Katalysator zusätzlich wenigstens ein feinteiliges pulverförmiges Oxid eines anderen Metalls, Nicht-Edelmetall-Oxid-Pulver, enthält, wobei das Nicht-Edelmetall-Oxid-Pulver in Gegenwart wässriger Elektrolyte chemisch beständig ist, gegebenenfalls mit einem Dotierungselement dotiert sein kann und eine elektrisch leitfähige Matrix aus Edelmetall-Oxid und/oder Edelmetall mit Ventilmetall-Oxid und/oder Ventilmetall und/oder dotiertem Nicht-Edelmetall-Oxid aufweist, in der das feinteilige ggf. dotierte Nicht-Edelmetall-Oxid-Pulver eingebettet ist, wobei der mittlere Partikeldurchmesser der Partikel des Nicht-Edelmetall-Oxid-Pulvers von 5 bis 800 nm beträgt und wobei das Nicht-Edelmetall-Oxid des Nicht-Edelmetall-Oxid-Pulvers ein oder mehrere Oxide und/oder Mischoxide aus der Reihe: Titanoxid, Zinnoxid, Nioboxid, Tantaloxid, Vanadiumoxid, Germaniumoxid, Telluroxid, Bleioxid, Manganoxid, Eisen-Antimonoxid oder Molybdänoxid umfasst.
Das Nicht-Edelmetall-Oxid-Pulver ist insbesondere Titanoxid und/oder Zinnoxid. Der Katalysator kann wenigstens ein Ventilmetalloxid und/oder Ventilmetall, insbesondere ein Ventilmetall ausgewählt aus der Reihe Ti, Zr, W, Ta, Nb oder deren Oxide und/ oder wenigstens ein dotiertes Nicht-Edelmetall-Oxid, insbesondere eine Verbindung ausgewählt aus der Reihe: Antimon-dotiertes Zinnoxid (ATO), Indium-Zinnoxid (ITO), Fluor-dotiertes Zinnoxid (FTO), Aluminium-dotiertes Zinkoxid (AZO) enthalten.

Bevorzugt sind als Edelmetall oder Edelmetalloxid eines oder mehrere aus der Reihe: Ruthenium, Iridium, Platin, Palladium, oder deren Oxide, besonders bevorzugt ausgewählt sind eines oder mehrere von Ruthenium und Iridium oder Rutheniumoxid und Iridiumoxid.
Durch den Einbau von feinteiligem Nicht-Edelmetall-Oxid-Pulver in den Katalysator bzw. in die Oberflächenstruktur der Elektrode kann der Edelmetall-Gehalt der Elektrodenbeschichtung reduziert werden und überraschenderweise gleichzeitig die Elektrolysespannung verglichen mit dem Stand der Technik abgesenkt werden, ohne dass der Sauerstoff-Gehalt im Chlor erhöht wird. Weiterer unerwarteter Vorteil der Anwendung des Katalysators bei der Natriumchlorid-Elektrolyse ist, dass die Natriumchlorid-Konzentration im Anolyt von 220g/l bis 300g/l auch auf weniger als 200 g/l NaCl reduziert werden kann, ohne dass der Sauerstoff-Gehalt im Chlorproduktgas ansteigt oder die Elektrolysespannung erhöht oder die Lebensdauer der Elektrode erniedrigt wird. Feinteilig im Sinne der Erfindung bedeutet, dass der mittlere Partikeldurchmesser der Partikel des Nicht-Edelmetall-Oxid-Pulvers Oxid-Pulvers von 5 bis 800 nm beträgt bevorzugt von 10 bis 600 nm.
Der Partikeldurchmesser kann beispielsweise mittels Elektronenmikroskopie an den Pulvern oder anderen geeigneten Partikelgrößenanalysatoren, z. B. basierend auf Laserbeugung, bestimmt werden.
Bevorzugt werden Partikel des Nicht-Edelmetall-Oxid-Pulvers mit einem mittleren Partikeldurchmesser von 10 bis 600 nm eingesetzt.
Das Nicht-Edelmetall-Oxid-Pulver kann sowohl Partikel mit annähernd sphärischer Symmetrie als auch faserförmige Partikel umfassen. Im Falle von faserförmigen Partikeln beziehen sich die obigen Angaben zum mittleren Partikeldurchmesser auf den mittleren Faserdurchmesser im Querschnitt. Im Falle von faserförmigen Partikeln beträgt deren mittlere Länge (Hauptausdehnung der Faser) bis zu 100 µm, bevorzugt bis 50 µm, besonders bevorzugt bis 20µm. Die spezifische Oberfläche des Nicht-Edelmetall-Oxid-Pulvers (bestimmt mittels Stickstoff-Adsorption nach Mehrpunkt-BET-Methode bei -196°C analog DIN ISO 9277) von 0,5 m²/g bis 500 m²/g, bevorzugt von 1,0 m²/g bis 300 m²/g, besonders bevorzugt von 2,0 m²/g bis 150 m²/g. Die Nicht-Edelmetall-Oxid-Pulver sind in Gegenwart wässriger Elektrolyte chemisch beständig. Es werden Metalloxide, die eine Rutil-artige Kristallstruktur bilden, wie beschrieben eingesetzt, nämlich ein oder mehrere Oxide und/oder Mischoxide aus der Reihe: Titanoxid, Zinnoxid, Nioboxid, Tantaloxid, Vanadiumoxid, Germaniumoxid, Telluroxid, Bleioxid, Manganoxid, Eisen-Antimonoxid oder Molybdänoxid.

Die im Katalysator eingesetzten Nicht-Edelmetall-Oxid-Pulver können ggf. auch dotiert sein. Durch eine Dotierung kann die elektrische Leitfähigkeit der Nicht-Edelmetall-Oxid-Pulver erhöht werden und so die gesamte Leitfähigkeit des Elektrokatalysators verbessert werden. Dotierung bedeutet hierbei dass der Anteil des Dotierungselements maximal 10 mol-% des betreffenden Metalloxids ausmacht. Bevorzugt beträgt deren Anteil bevorzugt 0,0001 bis 0,1 mol Dotierelement pro mol der Summe der anderen im Nicht-Edelmetall-Oxid enthaltenen Metalle.
Das Nicht-Edelmetall-Oxid-Pulver kann in einer bevorzugten Ausführung mit einem oder mehreren Dotierungselementen aus der Reihe: Antimon, Indium, Niob, Tantal, Zinn, Aluminium und Fluor dotiert sein. Bevorzugt sind mit Tantal und/oder Niob und/oder Antimon dotiertes Titanoxid oder Zinnoxid; oder Fluor-dotiertes Zinnoxid (FTO). Besonders bevorzugt ist Antimon-dotiertes Zinnoxid (ATO). Bevorzugte Nicht-Edelmetall-Oxid-Pulver sind solche aus Titanoxid und/oder Zinnoxid und/oder Titanoxid bedeckt mit Antimon-dotiertem Zinnoxid, besonders bevorzugt Titanoxid.
Das feinteilige Nicht-Edelmetall-Oxid-Pulver wird eingebettet in Mischungen von wenigstens einem Edelmetalloxid und/oder Edelmetall und/oder wenigstens einem Ventil-Metall-Oxid und/oder Ventilmetall und/oder dotierten Nichtedelmetall-Oxiden eingesetzt. Diese Mischungen können bevorzugt ausgehend von flüssiger Lösung unter Verwendung geeigneter Edelmetall-, Ventil-Metall-, Nicht-Edelmetall- und Dotierelement-Vorläuferverbindungen erhalten werden. Diesen Lösungen wird dann das feinteilige Nicht-Edelmetall-Oxid-Pulver zugesetzt. Die erhaltene Suspension wird auf einen elektrisch leitenden Träger aufgebracht und der Elektrokatalysator wird dann durch Trocknung und Sinterung erhalten. Besonders bevorzugt sind die feinteiligen Nicht-Edelmetall-Oxid-Pulver eingebettet in Mischungen von Edelmetalloxiden und Ventil-MetallOxiden und dotierten Nicht-Edelmetall-Oxiden.
Ventil-Metalle bzw. Ventil-Metall-Oxide im Sinne der Erfindung sind insbesondere die Metalle bzw. Metalloxide aus der Gruppe: Titan, Zirkon, Wolfram, Tantal und Niob, bevorzugt Titan und Tantal, besonders bevorzugt Titan bzw. deren jeweilige Oxide.
Bevorzugte dotierte Nicht-Edelmetall-Oxide sind mit Tantal und/oder Niob und/oder Antimon dotiertes Titanoxid oder Zinnoxid; oder Indium-Zinnoxid (Zinn-dotiertes Indiumoxid) oder Fluor-dotiertes Zinnoxid (FTO) oder Aluminium-dotiertes Zinkoxid (AZO). Besonders bevorzugt sind Antimon-dotiertes Zinnoxid (ATO) und Indium-Zinnoxid (ITO).

Durch den Zusatz von Ventil-Metall-Oxid und/oder Ventil-Metall und/oder Nicht-Edelmetall-Oxid, das gegebenenfalls dotiert sein kann, im Katalysator kann weniger Edelmetall eingesetzt werden. Es bildet sich eine elektrisch leitfähige feste Mischung aus Edelmetalloxid und/oder Edelmetall mit Ventil-Metall-Oxid und/oder Ventil-Metall und/oder Nicht-Edelmetall-Oxid, das gegebenenfalls dotiert sein kann.

Bevorzugt ist ein Katalysator, dadurch gekennzeichnet, dass der Katalysator 1 bis 90 mol-%, bevorzugt 5 bis 80 mol.-%, feinteiliges Nicht-Edelmetall-Oxid-Pulver und 0,05 bis 40 mol-%-, bevorzugt 1 bis 35 mol-%, Edelmetall und/oder Edelmetalloxid, und 0 bis 90 mol-% Ventilmetall und/oder Ventilmetalloxid, und 0 bis 90 mol-%, bevorzugt 0,01 bis 80 mol-% eines dotierten Nicht-Edelmetall-Oxids aufweist.

Besonders bevorzugt ist ein Katalysator, dadurch gekennzeichnet, dass der Katalysator 20 bis 70 mol.-% feinteiliges Nicht-Edelmetall-Oxid, 5 bis 30 mol.-% Edelmetall und/oder Edelmetalloxid, und 10 bis 75 mol% Ventilmetall und/oder Ventilmetalloxid und 0,1 bis 20 mol% eines dotierten Nicht-Edelmetall-Oxids aufweist.

Weiterer Gegenstand der Erfindung ist eine elektrokatalytische Beschichtung, die mindestens einen neuen Elektrokatalysator wie zuvor beschrieben, insbesondere einschließlich seiner bevorzugten Ausführungen, umfasst.

Gegenstand der Erfindung ist auch eine Elektrode zur Herstellung von Chlor mittels Elektrolyse Chlor-Ionen enthaltender wässriger Elektrolyte mindestens bestehend aus einem elektrisch leitenden Träger und einer katalytisch wirkenden Beschichtung, dadurch gekennzeichnet, dass die katalytisch wirkende Beschichtung einen neuen Katalysator wie zuvor beschrieben, insbesondere einschließlich seiner bevorzugten Ausführungen, enthält.

Bevorzugt ist eine Elektrode, dadurch gekennzeichnet, dass der elektrisch leitende Träger aus einem Ventilmetall aus der Reihe: Titan, Zirkon, Wolfram, Tantal und Niob gebildet ist, bevorzugt aus Titan bevorzugt Titan oder dessen Legierungen oder Tantal, besonders bevorzugt auf Titan oder Titanlegierungen basiert. Geeignete Titanlegierungen, die bevorzugt korrosionsstabiler sind als reines Titan und bevorzugt für die Elektrolyse von Salzsäure eingesetzt werden können, enthalten beispielsweise Palladium, oder Nickel und Palladium und Ruthenium und Chrom, oder Nickel und Molybdän, oder Aluminium und Niobium. Im Fall einer Titanlegierung sind Titan-Palladium (0,2 Gew.-% Pd) und oder Titan-Nickel-Chrom-Ruthenium-Palladium (0,35 bis 0,55 Gew.-% Ni, 0,1 bis 0,2 Gew.-% Cr, 0,02 bis 0,04% Ru und 0,01 bis 0,02 Gew.-% Pd) bevorzugt.

Für das erfindungsgemäße Verfahren wird als Werkstoff für den Träger und gegebenenfalls als Zusatz zur Beschichtung besonders bevorzugt Titan eingesetzt.

Elektroden mit Elektrodenbeschichtungen, die den Katalysator mit feinteiligen Nicht-Edelmetall-Oxid-Pulvern enthalten, können neben den beschriebenen Anwendungen bei der Chlorherstellung alternativ auch zur Erzeugung elektrischen Stroms in z.B. Brennstoffzellen und Batterien, in Redox-Kondensatoren, bei der Elektrolyse von Wasser, der Regenerierung von Chrombädern, bei Einsatz von fluorid-haltigen Elektrolyten bei der Wasserstoffperoxid-, Ozon- der Peroxodisulfat-Herstellung eingesetzt werden. Diese Verwendungen sind weiterer Gegenstand der Erfindung.

Die Beladung beträgt in einer bevorzugten Ausführung der neuen Elektrode von 0,1 bis 30 g Edelmetall / m² bzw. 0,1 bis 75 g feinteiliges Nicht-Edelmetall-Oxid / m². Die Fläche bezieht sich auf die projizierte Elektrodenoberfläche. Elektroden für die Chlorherstellung bestehen meist aus Streckmetallen oder Louver-Strukturen. Die Menge an Edelmetall bzw. feinteiligem Nicht-Edelmetall-Oxid bezieht sich dann auf eine Oberfläche, die durch die äußeren Abmessungen errechnet werden kann. Die Menge an Edelmetall bzw. feinteiligem Nicht-Edelmetalloxid die je m² aufgebracht wird, kann durch die Konzentration der Auftragslösung oder durch die Anzahl der Wiederholungszyklen eingestellt werden. Die einzelnen Zyklen können jeweils durch Trocknungs- und/oder Sinterzyklen unterbrochen sein. Die Trocknung bzw. Sinterung kann dabei bei vermindertem Druck und/oder in anderen Gasatmosphären erfolgen.

Gegenstand der Erfindung ist auch ein Verfahren zur Herstellung von Elektroden zur Herstellung von Chlor, dadurch gekennzeichnet, dass auf den vorstehend beschriebenen elektrisch leitenden Träger, die katalytische Beschichtung aufgebracht wird, indem eine Mischung aus Nicht-Edelmetall-Oxid-Pulver, einem Lösungsmittel, und einer vorzugsweise im Lösungsmittel löslichen Edelmetallverbindung und gegebenenfalls einer löslichen Ventilmetallverbindung und/oder einer löslichen Nicht-Edelmetallverbindung und gegebenenfalls einer löslichen Dotierelement-Verbindung auf den elektrisch leitenden Träger aufgebracht und zur Entfernung von Lösemittel getrocknet und anschließend bei erhöhter Temperatur gesintert wird.

Eine besondere Ausführungsform des neuen Verfahrens besteht darin, auf einer Elektroden-Struktur, die aus einem Ventilmetall besteht, die Katalysatoren wie folgt aufzubringen:

Hierfür wird die Elektroden-Struktur zunächst gesandstrahlt. Es kann anschließend zur Entfernung von Oxiden auf der Oberfläche mit einer Säure wie Salzsäure oder Oxalsäure geätzt werden. Die Ätzung kann bei Raumtemperatur oder aber auch beschleunigt bei erhöhter Temperatur erfolgen.

Zur Beschichtung der Oberfläche kann beispielsweise eine Suspension eingesetzt werden, die aus wenigstens einer Edelmetallverbindung, wenigstens einem Lösungsmittel aus der Reihe: C₁-C₆-Alkohol, bevorzugt Butanol oder Isopropanol, Wasser, einer Mineralsäure, einer Ventil-MetallVerbindung und dem Nicht-Edelmetall-Oxid-Pulver besteht.

Dieser Suspension können bedarfsweise weitere andere Metalle oder Metallverbindungen und Dotierelemente zugesetzt werden, so dass im fertigen Katalysator das Nicht-Edelmetall-Oxid-Pulver eingebettet ist in eine elektrisch leitfähige Mischung aus Edelmetalloxid und/oder Ventilmetalloxid und/oder dotiertem Nicht-Edelmetall-Oxid

Die Suspension zur Katalysatorherstellung weist bevorzugt bis 20 Gew.-%, besonders bevorzugt bis 10 Gew.-%, nicht löslichen Feststoff bezogen auf das gesamte Gewicht der Suspension, einschließlich Lösemittel auf. Es können jedoch auch Suspensionen mit geringerem Feststoffgehalt erzeugt werden, wenn der Beschichtungsprozess mit einer erhöhten Anzahl Zyklen durchgeführt werden soll. Eine erhöhte Anzahl Zyklen ist besonders dann vorteilhaft, wenn eine gleichmäßigere Edelmetallverteilung bei sehr geringem Edelmetallgehalt erreicht werden soll.

Als Edelmetall-Vorläuferverbindungen werden im Lösungsmittel lösliche Fluoride, Chloride, Iodide, Bromide, Nitrate, Phosphate, Sulfate, Acetate, Acetylacetonate oder Alkoxide von den Elementen Ru, Rh, Pd, Os, Ir und Pt, bevorzugt Rutheniumchlorid und/oder Iridiumchlorid eingesetzt.

Bevorzugte Ventilmetall-Vorläuferverbindungen sind im Lösungsmittel lösliche Fluoride, Chloride, Iodide, Bromide, Nitrate, Phosphate, Sulfate, Acetate, Acetylacetonate oder Alkoxide von den Elementen Titan, Zirkon, Wolfram, Tantal und Niob, bevorzugt wenigstens ein Titanalkoxid ausgewählt aus der Reihe: Titan-2-ethylhexyloxid, Titan-ethoxid, Titan-isobutoxid, Titan-isopropoxid, Titan-methoxid, Titan n-butoxid, Titan n-propoxid, besonders bevorzugt Titan n-butoxid und/oder Titan isopropoxid.

Es kann wenig Säure zugesetzt werden, die die Hydrolyse der Ventilmetall-Verbindung unterstützt. Geeignete Säuren sind solche ausgewählt aus der Reihe: Toluolsulfonsäure, Schwefelsäure, schweflige Säure, Phosphorsäure, phosphorige Säure, Phosphonsäure, Sulfonsäuren, blockierte Sulfonsäuren, blockierte Schwefel- und Phosphorsäure, Carbonsäuren, Dicarbonsäuren, Salzsäure, Salpetersäure und salpetrige Säure.
Es kann aber auch eine Beschichtungslösung oder -dispersion mit signifikantem Säureüberschuss bezogen auf die in der Beschichtungslösung enthaltenen metallischen Komponenten eingesetzt werden.

Dieser Lösung bzw. Suspension kann feinteiliges Nicht-Edelmetall-Oxid-Pulver zugesetzt werden, welches auch dotiert sein kann. Es können weiterhin Nicht-Edelmetall- und Dotierelement-Vorläuferverbindungen, die nach erfolgter Trocknung und/oder Sinterung ein dotiertes Nicht-Edelmetall-Oxid bilden, zugesetzt werden. Geeignete Nicht-Edelmetall-Vorläuferverbindungen sind im Lösungsmittel lösliche Fluoride, Chloride, Iodide, Bromide, Nitrate, Phosphate, Acetate, Acetylacetonate und/oder Alkoxide von den Elementen Antimon, Blei, Eisen, Germanium, Indium, Mangan, Molybdän, Niob, Tantal, Titan, Tellur, Vanadium, Zink, Zinn, und/oder Zirkon.

Bevorzugte Nicht-Edelmetallverbindungen sind Titanverbindungen ausgewählt aus der Reihe: Titanfluorid, Titanchlorid, Titaniodid, Titanbromid, Titan-2-ethylhexyloxid, Titan ethoxid Titan isobutoxid, Titan isopropoxid Titan methoxid, Titan n-butoxid, Titan n-propoxid,
und/oder Indiumverbindungen ausgewählt aus der Reihe: Indiumfluorid, Indiumchlorid, Indiumiodid, Indiumbromid, Indiumnitrat, Indiumphosphat, Indiumacetat, Indiumacetylacetonat, Indiumethoxid, Indiumpropoxid, Indiumbutoxid,
und/oder Manganverbindungen ausgewählt aus der Reihe Manganfluorid, Manganchlorid, Manganiodid, Manganbromid, Mangannitrat, Manganphosphat, Manganacetat, Manganacetylacetonat, Manganmethoxid, Manganethoxid, Manganpropoxid, Manganbutoxid,
und/oder Zinnverbindungen ausgewählt aus der Reihe: Zinnfluorid, Zinnchlorid, Zinniodid, Zinnbromid, Zinnacetat, Zinnacetylacetonat, Zinnmethoxid, Zinnethoxid, Zinnpropoxid, Zinnbutoxid,
und/oder Zinkverbindungen ausgewählt aus der Reihe: Zinkfluorid, Zinkchlorid, Zinkiodid, Zinkbromid, Zinknitrat, Zinkphosphat, Zinkacetat, Zinkacetylacetonat.

Besonders bevorzugte Nicht-Edelmetall-Vorläuferverbindungen sind Zinnchlorid und/oder Indiumchlorid.

Geeignete Dotierelement-Vorläuferverbindungen sind im Lösungsmittel lösliche Fluorverbindungen und/oder Fluoride, Chloride, Iodide, Bromide, Nitrate, Phosphate, Sulfate, Acetate, Acetylacetonate und/oder Alkoxide von den Elementen Aluminium, Antimon, Tantal, Niob, Zinn, Indium. Bevorzugte Dotierelement-Vorläuferverbindungen sind
Fluorverbindungen ausgewählt aus der Reihe: Fluoressigsäure, Difluoressigsäure, Trifluoressigsäure, Fluorwasserstoff, Ammoniumfluorid, Tetramethylammoniumfluorid
und/oder Aluminiumverbindungen ausgewählt aus der Reihe: Aluminiumfluorid, Aluminiumchlorid, Aluminiumiodid, Aluminiumbromid, Aluminiumnitrat, Aluminiumphosphat, Aluminiumsulfat, Aluminiumacetat, Aluminiumacetylacetonat, Aluminiumethoxid, Aluminiumpropoxid, Aluminiumbutoxid
und/oder Antimonverbindungen ausgewählt aus der Reihe: Antimonfluorid, Antimonchlorid, Antimoniodid, Antimonbromid, Antimonsulfat, Antimonacetat, Antimonacetylacetonat, Antimonmethoxid, Antimonethoxid, Antimonpropoxid, Antimonbutoxid
und/oder Tantalverbindungen ausgewählt aus der Reihe: Tantalfluorid, Tantalchlorid, Tantaliodid, Tantalbromid, Tantalmethoxid, Tantalethoxide
und/oder Niobverbindungen ausgewählt aus der Reihe: Niobfluorid, Niobchlorid, Niobiodid, Niobethoxid, Niobpropoxid, Niobbutoxid
und/oder Indiumverbindungen ausgewählt aus der Reihe: Indiumfluorid, Indiumchlorid, Indiumiodid, Indiumbromid, Indiumnitrat, Indiumphosphat, Indiumsulfat, Indiumacetat, Indiumacetylacetonat, Indiumethoxid, Indiumpropoxid, Indiumbutoxid
und/oder Zinnverbindungen ausgewählt aus der Reihe: Zinnfluorid, Zinnchlorid, Zinniodid, Zinnbromid, Zinnsulfat, Zinnacetat, Zinnacetylacetonat, Zinnmethoxid, Zinnethoxid, Zinnpropoxid, Zinnbutoxid.

Besonders bevorzugte Dotierelement-Vorläuferverbindungen sind Antimonchlorid und/oder Zinnchlorid.

Durch Zusatz der Ventilmetall-Verbindung und/oder weiterer Nicht-Edelmetall-Verbindungen kann der Edelmetall-Gehalt des Katalysators weiter herabgesetzt werden und man erhält im fertigen Katalysator eine elektrisch leitfähige Matrix aus Edelmetall-Oxid und/oder Edelmetall, Ventilmetall-Oxid und/oder Ventilmetall und dotiertem Nicht-Edelmetall-Oxid, in der das feinteilige ggf. dotierte Nicht-Edelmetall-Oxid-Pulver eingebettet ist.

Durch Variation der Zusammensetzung der Suspension kann die Viskosität auf den jeweiligen Auftragungs-Prozess abgestimmt werden. Es können dazu z.B. grundsätzlich bekannte Verdicker wie nichtionische, wasserlösliche Polyethylenoxid-Polymere und/oder wasserlösliche Methylzellulose- und/oder Hydroxypropyl-Methylcellulose-Polymere, Stabilisatoren wie Polyvinylalkohol und/oder Polyacrylsäure und/oder Polyvinylpyrrolidon, und Benetzungsadditive anionische Tenside wie Natriumdodecylsulfat oder kationische Tenside wie Dodecyltrimethylammonium-chlorid oder nichtionische Tenside wie Polyethylenglycolmonolaurat verwendet werden.

Die hergestellte Suspension wird bevorzugt in mehreren Zyklen auf die Oberfläche des Trägers aufgebracht. Dies kann durch Pinseln, Sprühen, Fluten oder Tauchen des Trägers in die Beschichtungsdispersion erfolgen. Ebenso sind andere Aufbringverfahren, z. B. Druckverfahren denkbar. Nach einem Aufbringzyklus werden die flüssigen Komponenten der Suspension durch Trocknung entfernt. Jetzt besteht die Möglichkeit einen neuen Auftragsschritt zu beginnen oder die Elektrode nach der Trocknung einer Sinterung bei einer Temperatur von mindestens 300°C auszusetzen. Hiernach kann erneut die Suspension aufgebracht getrocknet und gesintert werden.

Die Trocknung der Beschichtung kann bei Normaldruck als auch bei vermindertem Druck, bevorzugt in sauerstoffhaltigem Gas, besonders bevorzugt Luft oder ggf. unter einem Schutzgas, insbesondere mindestens einem Gas der Reihe: Stickstoff oder Edelgas, insbesondere Helium, Neon, Argon oder Krypton, erfolgen. Bei sauerstoffhaltigem Gas wie beispielsweise Luft wird in der Regel ein weitgehend oxidischer Katalysator erhalten. Bei Einsatz von Schutzgas kann ein Metall-Oxid-Gemisch erhalten werden. Dies gilt ebenso für die Sinterung der Beschichtung.

Es ist ebenfalls denkbar, die Rezeptur der Suspension bei den verschiedenen Auftrags- und Trocknungszyklen zu verändern und dadurch Gradienten im Aufbau der Beschichtung zu erzeugen. So kann bevorzugt zuerst mit geringem Edelmetall-Gehalt das Elektrodenmetall beschichtet werden und in weiteren Beschichtungszyklen der Edelmetallgehalt erhöht werden.

Ebenso ist denkbar, verschiedene Nicht-Edelmetall-Oxid-Pulver in der Suspension zu mischen.

Gegenstand der Erfindung ist ferner eine Elektrode erhalten nach dem neuen Beschichtungsverfahren.

Die Erfindung wird nachfolgend beispielhaft näher erläutert.

### Beispiele

### Beispiel 1: (Vergleichsbeispiel mit handelsüblichen Anoden für die NaCl-Elektrolyse und Elektrolysetest)

a) Es wurde eine Standard-Streckmetall-Anode der Fa. De Nora für die NaCl-Elektrolyse, die mit einer Ruthenium-haltigen Beschichtung ausgerüstet war, eingesetzt. Dabei betrug die projizierte Grundfläche der Anode in der eingesetzten Laborzelle 10 cm *10 cm, das Anodenträgermaterial bestand aus Titan und hatte die Form eines Streckmetalls, charakterisiert durch die Maschenweite 8 mm, Stegbreite 2 mm und Stegdicke 2 mm. Zwischen Anoden- und Kathodenraum wurde eine Ionenaustauschermembran der Fa. Dupont, Typ Nafion 982, eingesetzt. Als Kathode diente eine Standard-Kathode aus Nickel der Fa. De Nora für die NaCl-Elektrolyse, die mit einer Ruthenium-haltigen Beschichtung ausgerüstet war. Der Elektrodenabstand betrug 3 mm. In den Anodenraum der Elektrolysezelle wurde eine NaCl-haltige Lösung mit einer Natriumchlorid-Konz. von 210 g/, einem Volumenstrom zwischen 5 und 10 1/h und einer Temperatur von 88 °C eingeleitet. Auf der Kathodenseite der Zelle wurde eine Natronlauge mit einer NaOH-Konz. von 31,5 Gew.-%, /, einem Volumenstrom zwischen 5 und 10 l/h und einer Temperatur von 88 °C eingeleitet. Die Stromdichte betrug 4 kA/m², berechnet auf die Membranfläche von 10 cm *10 cm. Die Chlor-Konzentration des aus der Anoden-Kammer entweichenden Gases betrug 97 Vol.-%. Die Elektrolysespannung betrug 3,05 V.
b) Die in a) beschriebene Zelle wurde umgebaut, indem als Kathode eine gemäß Patentschrift DE102010031571A1 (Beispiel 5) hergestellte Sauerstoffverzehrkathode auf einem galvanisch vergoldeten Nickel-Streckmetall als Stromverteiler eingesetzt wurde. Als zusätzlicher Reaktand wurde kathodisch Sauerstoff (Reinheit > 99,5%) mit einem Volumenstrom von 45 bis 55 1/h der Rückseite der Sauerstoffverzehrkathode zugeführt. Bei einer Stromdichte von 4 kA/m², einer Temperatur von 90 °C und einer Natronlaugekonzentration von 32 Gew.-% betrug die Elektrolysespannung 2,12 V bei einer Chlor-Konzentration des aus der Anoden-Kammer entweichenden Gases von 96,8%.

### Beispiel 2: (Vergleichsbeispiel)

Eine Beschichtungslösung, bestehend aus 2,02 g Ruthenium(III)chlorid-Hydrat (Ru-Gehalt 40,6 Gew.-%), 1,50 g Iridium(III)chlorid-Hydrat (Ir-Gehalt 54,7%), 17,4 ml n-Butanol, 1,1 ml konz. Salzsäure, 6 ml Titansäure tetra n-butylester (Ti-(O-Bu)₄) wird angemischt. Diese wird auf ein gesandstrahltes und anschließend in 10%iger Oxalsäure bei 90°C 30 Minuten lang geätztes Titan-Streckmetall als Träger mittels Pinsel aufgetragen. Anschließend wird das Streckmetall für 10 min bei 80 °C getrocknet und anschließend bei 10 min bei 470 °C gesintert. Der Auftragsprozess wird fünfmal wiederholt, ebenso die Trocknung und Sinterung. Die letzte Sinterung erfolgt bei 470 °C für 60 min. Die Edelmetallbeladung betrug 11,0 g Ru/m² und 11,0 g Ir/m². Die erzeugte Oberfläche hat eine Zusammensetzung von 27,0 mol-% Ru, 14,2 mol-% Ir und 58,8 mol-%Ti. Diese so behandelte Anode wurde in einer Zelle wie im Beispiel 1 bei der Natriumchlorid-Elektrolyse mit einer handelsüblichen Standard-Kathode eingesetzt. Die Chlor-Konzentration des aus der Anoden-Kammer entweichenden Gases betrug 97,4 Vol.-%. Die Elektrolysespannung betrug 3,06 V.

### Beispiel 3: TiO₂-RuO₂-Mischoxid hergestellt durch thermische Zersetzung (Vergleichsbeispiel)

Zur Herstellung einer Beschichtung durch thermische Zersetzung wurde eine Beschichtungslösung enthaltend 2,00 g Ruthenium(III)chlorid-Hydrat (Ru-Gehalt 40,5 Gew.-%), 21,56 g n-Butanol, 0,94 g konzentrierte Salzsäure und 5,93 g Titansäure tetra n-butylester hergestellt. Ein Teil der Beschichtungslösung wurde mittels eines Pinsels auf ein Titanplättchen aufgetragen, welches zuvor in 10 Gew.-% Oxalsäure bei ca 90 °C für 0,5h geätzt wurde. Dieses wurde nach dem Beschichtungsauftrag für 10 Minuten bei 80 °C an Luft getrocknet und anschließend für 10 Minuten bei 470 °C an Luft behandelt. Dieser Vorgang (Lösungsauftrag- Trocknung, Wärmebehandlung) wurde insgesamt acht Mal durchgeführt. Anschließend wurde das Plättchen für eine Stunde bei 520 °C an Luft behandelt. Die Ruthenium-Flächenbeladung wurde aus dem Verbrauch der Beschichtungslösung zu 16,1 g/m² bestimmt, bei einer Zusammensetzung von 31,5 mol-% RuO₂ und 68,5 mol-% TiO₂.

### Beispiel 4: TiO₂-RuO₂-IrO₂-Mischoxid hergestellt durch thermische Zersetzung (Vergleichsbeispiel)

Zur Herstellung einer Beschichtung durch thermische Zersetzung wurde eine Beschichtungslösung enthaltend 0,99 g Ruthenium(III)chlorid-Hydrat (Ru-Gehalt 40,5 Gew.-%), 0,78 g Iridium(III)chlorid-Hydrat (Ir-Gehalt 50,9 Gew.-%), 9,83 g n-Butanol, 0,29 g konzentrierte Salzsäure und 5,9 g Titansäure tetra n-butylester hergestellt. Ein Teil der Beschichtungslösung wurde mittels eines Pinsels auf ein Titanplättchen aufgetragen, welches zuvor in 10 Gew.-% Oxalsäure bei ca 90 °C für 0,5h geätzt wurde. Dieses wurde nach dem Beschichtungsauftrag für 10 Minuten bei 80 °C an Luft getrocknet und anschließend für 10 Minuten bei 470 °C an Luft behandelt. Dieser Vorgang (Lösungsauftrag- Trocknung, Wärmebehandlung) wurde insgesamt acht Mal durchgeführt. Anschließend wurde das Plättchen für eine Stunde bei 470 °C an Luft behandelt. Die Ruthenium-Flächenbeladung wurde aus der Gewichtszunahme jeweils zu 5,44 g/m² bestimmt, die Iridium-Flächenbeladung entsprechend zu 5,38 g/m² (Gesamt-Edelmetallbeladung 10,83 g/m²), bei einer Zusammensetzung von 17,0 mol-% RuO₂, 8,7 mol-% IrO₂ und 74,3 mol-% TiO₂.

### Beispiel 5. Lösungsmittelhaltige Synthese mit 11 mol-% Ru - Zugabe von TiO₂/ATO-Partikel (erfindungsgemäß)

a) Titanplatten mit einem Durchmesser von 15 mm (Dicke 2 mm) wurden zur Reinigung und zur Aufrauung der Oberfläche sandgestrahlt und anschließend in 10%-iger Oxalsäure bei 80°C geätzt (30 min), anschließend mit Isopropanol gereinigt.

Ein Titan-Streckmetall der Geometrie wie in Beispiel 1 beschrieben wurde sandgestrahlt.

### Herstellung der Beschichtungslösung:

Lösung 1: 1,12 g Tipaque ET-500W von Ishihara Corporation (Partikelgröße 200-300 nm; BET Oberfläche 6-8 m²/g; Dichte 4,6 g/cm³; TiO₂-Rutil bedeckt mit einer dünnen elektrisch leitfähigen Schicht Animon dotierten Zinnoxids (ATO, SnO₂:Sb) wurde in 16,03 g n-Butanol mittels Ultraschall 1 h dispergiert.

Lösung 2: 0,52 g Ruthenium(III)chlorid-Hydrat (Ru-Gehalt 40,35 Gew.-%), 1,59 g Titansäure tetra n-butylester und 0,25g konz. Salzsäure wurden in 16,0 g n-Butanol gelöst.

Lösung 2 wurde unter Rühren zur Lösung 1 getropft und 96 h gerührt. Die Beschichtungslösung wurde vier Mal auf Titanplättchen getropft und parallel vier Mal auf Titan-Streckmetall gepinselt.

Die Ruthenium-Flächenbeladung wurde aus der Gewichtszunahme des Plättchens zu 2,48 g/m² bestimmt, bei einer Zusammensetzung von 10,9 mol-% RuO₂, 80,0 mol-% TiO₂ und 9,1 mol-% SnO₂:Sb (ATO), wobei die Verteilung von TiO₂ und ATO (SnO₂:Sb₂O₅) in Tipaque ET-500 W aus der vom Hersteller angegebener Dichte berechnet wurde. Die Konzentration von Tipaque ET-500 W betrug 63,2 Gew-%. Die Ruthenium-Flächenbeladung des Streckmetalls betrug ca. 1,1 g/m².

Nach jedem Auftrag der Lösung wurde jeweils 10 min bei 80 °C getrocknet und anschließend 10 min bei 470 ° C gesintert (an Luft). Nach Aufbringen der letzten Schicht wurde noch eine Stunde bei 520 °C gesintert.
b) Ein weiteres Streckmetall wurde wie unter a) oben beschrieben vorbehandelt und beschichtet, mit dem einzigen Unterschied, dass anstelle von vier Auftragszyklen der Beschichtungslösung jetzt zwölf Auftragszyklen mit jeweils analoger Trocknung und Sinterung erfolgten. Die Ruthenium Flächenbeladung des Streckmetalls betrug 3,1 g/m² bei gleicher Zusammensetzung wie unter a).

### Beispiel 6: Lösungsmittelhaltige Synthese mit 11 mol-% Ru - Zugabe von TiO₂/ATO-Fasern (erfindungsgemäß)

Titanplatten mit einem Durchmesser von 15 mm (Dicke 2 mm) wurden zur Reinigung und zur Aufrauung der Oberfläche sandgestrahlt und anschließend in 10%-iger Oxalsäure bei 80°C geätzt (30 min), anschließend mit Isopropanol gereinigt.

Lösung 1: 0,45 g Tipaque FT-1000 der Ishihara Corporation (TiO₂ (Rutil) Fasern bedeckt mit einer Antimon dotierten Zinnoxid (ATO) Schicht. Faserdurchmesser 130 nm, Faserlänge 1,68 µm; BET-Oberfläche 12-18m²/g; Dichte 4,4g/cm³) wurde in 6,4 g n-Butanol mittels Ultraschall 1 h dispergiert.

Lösung 2: 0,21 g Ruthenium(III)chlorid-Hydrat (Ru-Gehalt 40,35 Gew.-%), 0,64 g Titan(IV) n-butoxid und 0,1g konz. Salzsäure wurden in 6,4 g n-Butanol gelöst.

Lösung 2 wurde unter Rühren zur Lösung 1 getropft und 96 h gerührt. Die Beschichtungslösung wurde vier Mal auf Titanplättchen getropft.

Die Ruthenium-Flächenbeladung wurde aus der Gewichtszunahme des Plättchens zu 3,60 g/m² bestimmt, bei einer Zusammensetzung von 10,5 mol-% RuO₂, 84,9 mol-% TiO₂ und 4,6 mol-% SnO₂:Sb (ATO), wobei die Verteilung von TiO₂ und ATO (SnO₂:Sb₂O₅) in Tipaque FT-1000 aus der vom Hersteller angegebener Dichte berechnet wurde. Die Konzentration von Tipaque FT-1000 betrug 63,0 Gew-%.

Nach jedem Auftrag der Lösung wurde jeweils 10 min bei 80 °C getrocknet und anschließend 10 min bei 470 ° C gesintert (an Luft). Nach Aufbringen der letzten Schicht wurde noch eine Stunde bei 520 °C gesintert.

### Beispiel 7: Lösungsmittelhaltige Synthese mit 11 mol-% Ru - Zugabe von TiO₂-Partikel (erfindungsgemäß)

Titanplatten mit einem Durchmesser von 15 mm (Dicke 2 mm) wurden zur Reinigung und zur Aufrauung der Oberfläche sandgestrahlt und anschließend in 10%-iger Oxalsäure bei 80°C geätzt (30 min), anschließend mit Isopropanol gereinigt.

### Herstellung der Beschichtungslösung:

Lösung 1: 1,02 g crenox TR-HP-2 von crenox GmbH (BET Oberfläche 5-7 m²/g; Dichte 4,2 g/cm³; TiO₂-Rutil 99,5 % Reinheit, mittlere Partikelgröße 206 nm (bestimmt aus elektronenmikroskopischer Aufnahme als Durchschnitt aus 38 Partikeln) wurde in 15,03 g n-Butanol mittels Ultraschall 1 h dispergiert.

Lösung 2: 0,52 g Ruthenium(III)chlorid-Hydrat (Ru-Gehalt 40,35 Gew.-%) 1,59 g Titansäure tetra n-butylester und 0,25g konz. Salzsäure wurden in 15,03 g n-Butanol gelöst.

Lösung 2 wurde unter Rühren zur Lösung 1 getropft und 96 h gerührt. Die Beschichtungslösung wurde vier Mal auf Titanplättchen getropft.

Die Ruthenium-Flächenbeladung wurde aus der Gewichtszunahme des Plättchens zu 2,73 g/m² bestimmt, bei einer Zusammensetzung von 10,7 mol-% RuO₂ und 89,3 mol-% TiO₂. Die Konzentration von crenox TP-HR-2 betrug 61,1 Gew-%.

Nach jedem Auftrag der Lösung wurde jeweils 10 min bei 80 °C getrocknet und anschließend 10 min bei 470 ° C gesintert (an Luft). Nach Aufbringen der letzten Schicht wurde noch eine Stunde bei 520 °C gesintert.

### Beispiel 8: Lösungsmittelhaltige Synthese mit 11 mol-% Ru - Zugabe von TiO₂-Partikel und Antimon-dotiertem Zinnoxid (erfindungsgemäß)

Titanplatten mit einem Durchmesser von 15 mm (Dicke 2 mm) wurden zur Reinigung und zur Aufrauung der Oberfläche sandgestrahlt und anschließend in 10%-iger Oxalsäure bei 80°C geätzt (30 min), anschließend mit Isopropanol gereinigt.

### Herstellung der Beschichtungslösung:

Lösung 1: 960 mg crenox TR-HP-2 von crenox GmbH (BET Oberfläche 5-7 m²/g; Dichte 4,2 g/cm³; TiO₂-Rutil 99,5 % Reinheit, Dichte 4,2 g/cm³, durchschnittliche Partikelgröße 206 nm) wurde in einer Lösung von 218 mg Zinn(IV)chlorid-Pentahydrat und 9 mg Antimon(III)chlorid in 15,32 g n-Butanol mittels Ultraschall 1 h dispergiert.

Lösung 2: 0,52 g Ruthenium(III)chlorid-Hydrat (Ru-Gehalt 40,35 Gew.-%), 1,59 g Titansäure tetra n-butylester und 0,25g konz. Salzsäure wurden in 15,32 g n-Butanol gelöst.

Lösung 2 wurde unter Rühren zur Lösung 1 getropft und 96 h gerührt. Die Beschichtungslösung wurde vier Mal auf Titanplättchen getropft.

Die Ruthenium-Flächenbeladung wurde aus der Gewichtszunahme des Plättchens zu 4,13 g/m² bestimmt, bei einer Zusammensetzung von 10,7 mol-% RuO₂, 86,0 mol-% TiO₂, 3,2 mol-% SnO₂ und 0,1 mol-% Sb₂O₅. Die Konzentration von crenox TP-HR-2 betrug 56,2 Gew-%.

Nach jedem Auftrag der Lösung wurde jeweils 10 min bei 80 °C getrocknet und anschließend 10 min bei 470 ° C gesintert (an Luft). Nach Aufbringen der letzten Schicht wurde noch eine Stunde bei 520 °C gesintert.

### Beispiel 9: (Vergleichsbeispiel)

Es wurde eine Beschichtung analog zu Beispiel 8 hergestellt, mit dem einzigen Unterschied, dass das erfindungsgemäße feinteilige Titanoxid-Pulver (crenox TR-HP-2, Struktur Rutil Typ) durch ein deutlich gröberes Titanoxid-Pulver mit Anatas-Struktur (Sigma-Aldrich Titanium(IV) oxide, anatase -325 mesh, Produktnummer 248576 mit Partikelgrößen bis zu 45 µm) ersetzt wurde. Die Ruthenium-Flächenbeladung wurde aus der Gewichtszunahme des Plättchens zu 4,28 g/m² bestimmt, bei einer Zusammensetzung von 10,7 mol-% RuO₂, 86,0 mol-% TiO₂, 3,2 mol-% SnO₂ und 0,1 mol-% Sb₂O₅.

### Beispiel 10: (Vergleichsbeispiel)

Es wurde eine Beschichtung analog zu Beispiel 8 hergestellt, mit dem Unterschied, dass kein TiO₂-Pulver (crenox TR-HP-2) zugesetzt wurde und dafür die Menge an Titansäure tetra n-butylester in der Rezeptur auf auf 5,68 g erhöht wurde, so dass die gleiche Zusammensetzung ohne Pulver-Zusatz erhalten wurde. Die Ruthenium-Flächenbeladung wurde aus der Gewichtszunahme des Plättchens zu 3,83 g/m² bestimmt, bei einer (Zusammensetzung von 10,7 mol-% RuO₂, 86,0 mol-% TiO₂, 3,2 mol-% SnO₂ und 0,1 mol-% Sb₂O₅).

### Beispiel 11: Kombination Herstellung aus feinteiligem Partikel-Zusatz und Säureüberschuss:

Titanplatten mit einem Durchmesser von 15 mm (Dicke 2 mm) wurden zur Reinigung und zur Aufrauung der Oberfläche sandgestrahlt und anschließend in 10%-iger Oxalsäure bei 80°C geätzt (30 min), anschließend mit Isopropanol gereinigt.

### Herstellung der Beschichtungslösung:

Lösung 1: Zu einer Vorlage von 4,77 g Essigsäure wurde 1,59 g Titansäure tetra n-butylester unter Kühlung im Eisbad und kräftigem Rühren zugetropft, wobei zwischen zwei Tropfen mindestens 1 min Rührzeit lagen. Die entstandene klare Lösung wurde anschließend unter Kühlung 12 h weiter gerührt.

Lösung 2: 0,96 g crenox TR-HP-2 von crenox GmbH (BET Oberfläche 5-7 m²/g; Dichte 4,2 g/cm³; TiO₂-Rutil 99,5 % Reinheit, Dichte 4,2 g/cm³, mittlere Partikelgröße 206 nm (bestimmt aus elektronenmikroskopischer Aufnahme als Durchschnitt aus 38 Partikeln) wurde in einer Lösung von 0,52 g Ruthenium(III)chlorid-Hydrat (Ru-Gehalt 40,35 Gew.-%), 216 mg Zinn(IV)chlorid-Pentahydrat und 9 mg Antimon(III)chlorid in 26,11 g demineralisiertes Wasser mittels Ultraschall 1 h dispergiert. Lösung 2 wurde zu Lösung 1 getropft, wobei Lösung 1 im Eisbad gekühlt und kräftigt gerührt wurde. Das Produkt wurde danach 96 h weiter gerührt.

Die Beschichtungslösung wurde vier Mal auf Titanplättchen aufgetropft. Die Ruthenium-Flächenbeladung wurde aus der Gewichtszunahme des Plättchens zu 4,85 g/m² bestimmt, bei einer Zusammensetzung von 86,0 mol-% TiO₂, 10,7 mol-% RuO₂, 3,2 mol-% SnO₂ und 0,1 mol-% Sb₂O₅.

Nach jedem Auftrag der Lösung wurde jeweils 10 min bei 80 °C getrocknet und anschließend 10 min bei 470 ° C gesintert (an Luft). Nach Aufbringen der letzten Schicht wurde noch eine Stunde bei 520 °C gesintert.

### Beispiel 12: (elektrochemischer Test an Plättchen)

Die elektrochemische Aktivität für die Chlorentwicklung wurde für Proben auf Titanelektroden (15 mm Durchmesser, 2 mm Dicke) aus den Beispielen 3 bis 11 im Labormaßstab durch Aufnahme von Polarisationskurven gemessen.

Versuchsparameter: gemessen in 200 g/l NaCl (pH-Wert = 3) unter Durchfluss von 100 ml/min bei 80°C, galvanostatisch mit 5 min pro Stromstufe, Potential gegen Ag/AgCl gemessen und umgerechnet auf Normalwasserstoffelektrode (NHE), Potentialwerte um Ohmsche Spannungsabfälle in der Zelle korrigiert (sogenannte IR-Korrektur), Gegenelektrode: platiniertes Titanstreckmetall, Stromdichte 4 kA/m².

Die Potentiale (vs. NHE) bei einer Stromdichte von jeweils 4 kA/m² betrugen
Probe aus Beispiel 3: 1,423 V
Probe aus Beispiel 4: 1,403 V
Probe aus Beispiel 5a): 1,350 V;
Probe aus Beispiel 6: 1,411 V;
Probe aus Beispiel 7: 1,427 V
Probe aus Beispiel 8: 1,390 V.
Probe aus Beispiel 9: 1,709 V
Probe aus Beispiel 10: 1,572 V
Probe aus Beispiel 11: 1,388 V

Die erfindungsgemäßen Beispiele 5a) bis 8 und 11 enthaltend Nicht-Edelmetall-Oxid-Pulver ergeben verglichen mit den Vergleichsbeispielen 3 und 4 bei deutlich verringerter Edelmetall-Konzentration im Katalysator und gleichzeitig niedrigerer Edelmetall-Beladung niedrigere oder ähnliche Potentialwerte für die Chlorentwicklung. Durch Zusatz von Nicht-Edelmetall-Oxid-Pulver in Verbindung mit einem Säureüberschuss wird ebenfalls ein niedrigeres Potential erhalten (siehe erfindungsgemäßes Bsp.11). Bei Zusatz von gröberem Nicht-Edelmetall-Oxid-Pulver (Partikelgröße bis zu 45 µm vom Anatas-Typ,Bsp. 9) wird ein sehr hoher Potentialwert, gleichbedeutend mit einem höheren Energieverbrauch in der Elektrolyse erhalten. Ohne feinteiligen Partikelzusatz (Bsp. 10) wird ebenfalls ein hohes Potential erhalten.

### Beispiel 13: Laborelektrolyse

Die Beschichtung auf Titan-Streckmetall aus Beispiel 5a) wurde in einer Zelle wie im Beispiel 1a) bei der Natriumchlorid-Elektrolyse mit einer handelsüblichen Standard-Kathode als Anode eingesetzt. Die Elektrolysespannung betrug nach vier Tagen 3,00 V, anschließend wurde die Stromdichte auf 6 kA/m² erhöht und die NaCl-Konzentration auf 180 g/l abgesenkt. Nach anfangs 3,22 V fiel die Elektrolysespannung noch etwas ab, auf 3,19 V nach 5 Tagen bei 6 kA/m². Die mittlere Elektrolysespannung über die nächsten 50 Betriebstage betrug dann weiterhin 3,19 V. Anschließend wurde wieder auf die Stromdichte von 4 kA/m² gestellt bei einer Solekonzentration von 210 g/l und die Elektrolysespannung betrug 2,92 V.

### Beispiel 14: Laborelektrolyse

Die Beschichtung auf Titan-Streckmetall aus Beispiel 5b) wurde in einer Zelle wie im Beispiel 1b) bei der Natriumchlorid-Elektrolyse mit Sauerstoffverzehrkathode als Anode eingesetzt.

Bei einer Stromdichte von 4 kA/m², einer Temperatur von 90 °C und einer Natronlaugekonzentration von 32 Gew.-% betrug die Elektrolysespannung 2,07 V bei einer Chlor-Konzentration des aus der Anoden-Kammer entweichenden Gases von 97,2%.

## Patentansprüche

1. Elektrokatalysator zur Herstellung von Chlor mittels Elektrolyse von Chlor-Ionen enthaltenden Elektrolyten, auf Basis wenigstens eines Edelmetalloxids und/oder Edelmetalls der Nebengruppe: VIIIa des periodischen Systems der Elemente ausgewählt aus der Reihe: Ru, Rh, Pd, Os, Ir, Pt, **dadurch gekennzeichnet, dass** der Katalysator zusätzlich wenigstens ein feinteiliges pulverförmiges Oxid eines anderen Metalls, Nicht-Edelmetall-Oxid-Pulver, enthält, wobei das Nicht-Edelmetall-Oxid-Pulver in Gegenwart wässriger Elektrolyte chemisch beständig ist, gegebenenfalls mit einem Dotierungselement dotiert sein kann und eine elektrisch leitfähige Matrix aus Edelmetall-Oxid und/oder Edelmetall mit Ventilmetall-Oxid und/oder Ventilmetall und/oder dotiertem Nicht-Edelmetall-Oxid aufweist, in der das feinteilige ggf. dotierte Nicht-Edelmetall-Oxid-Pulver eingebettet ist, wobei der mittlere Partikeldurchmesser der Partikel des Nicht-Edelmetall-Oxid-Pulvers von 5 bis 800 nm beträgt und wobei das Nicht-Edelmetall-Oxid des Nicht-Edelmetall-Oxid-Pulvers ein oder mehrere Oxide und/oder Mischoxide aus der Reihe: Titanoxid, Zinnoxid, Nioboxid, Tantaloxid, Vanadiumoxid, Germaniumoxid, Telluroxid, Bleioxid, Manganoxid, Eisen-Antimonoxid oder Molybdänoxid umfasst.

2. Elektrokatalysator gemäß Anspruch 1, **dadurch gekennzeichnet, dass** als Edelmetall oder Edelmetalloxid eines oder mehrere aus der Reihe: Ruthenium, Iridium, Platin, Palladium, bzw. deren Oxide ausgewählt sind.

3. Elektrokatalysator gemäß Anspruch 2, **dadurch gekennzeichnet, dass** als Edelmetall oder Edelmetalloxid eines oder mehrere von Ruthenium und Iridium oder Rutheniumoxid und Iridiumoxid ausgewählt sind.

4. Elektrokatalysator gemäß einem der Ansprüche 1 bis 3, **dadurch gekennzeichnet, dass** der mittlere Partikeldurchmesser der Partikel des Nicht-Edelmetall-Oxid-Pulvers von 10 bis 600 nm beträgt.

5. Elektrokatalysator gemäß einem der Ansprüche 1 bis 4, **dadurch gekennzeichnet, dass** das Nicht-Edelmetall-Oxid des Nicht-Edelmetall-Oxid-Pulvers Titanoxid und/oder Zinnoxid umfasst.

6. Elektrokatalysator gemäß einem der Ansprüche 1 bis 5, **dadurch gekennzeichnet, dass** das Nicht-Edelmetall-Oxid-Pulver sowohl Partikel mit annähernd sphärischer Symmetrie als auch faserförmige Partikel umfasst.

7. Elektrokatalysator gemäß Anspruch 6, **dadurch gekennzeichnet, dass** das Nicht-Edelmetall-Oxid-Pulver faserförmige Partikel umfasst, die eine mittlere Länge, Hauptausdehnung der Faser, bis zu 100 µm, bevorzugt bis 50 µm, besonders bevorzugt bis 20µm aufweisen.

8. Elektrokatalysator gemäß einem der Ansprüche 1 bis 7, **dadurch gekennzeichnet, dass** die spezifische Oberfläche des Nicht-Edelmetall-Oxid-Pulvers bestimmt mittels Stickstoff-Adsorption nach Mehrpunkt-BET-Methode bei -196°C analog DIN ISO 9277 von 0,5 m²/g bis 500 m²/g, bevorzugt von 1,0 m²/g bis 300 m²/g, besonders bevorzugt von 2,0 m²/g bis 150 m²/g beträgt.

9. Elektrokatalysator gemäß einem der Ansprüche 1 bis 8, **dadurch gekennzeichnet, dass** das Nicht-Edelmetall-Oxid des Nicht-Edelmetall-Oxid-Pulvers mit einem oder mehreren Dotierungselementen aus der Reihe: Antimon, Niob, Tantal, Iridium und Fluor dotiert ist, deren Anteil bevorzugt 0,0001 bis 0,1 mol Dotierelement pro mol der Summe der anderen im Nicht-Edelmetall-Oxid enthaltenen Metalle beträgt.

10. Elektrokatalysator gemäß einem der Ansprüche 1 bis 9, **dadurch gekennzeichnet, dass** der Katalysator 1 bis 90 mol%, bevorzugt 5 bis 80 mol.-%, besonders bevorzugt 20 bis 70 mol.-%, feinteiliges Nicht-Edelmetall-Oxid-Pulver und 0,05 bis 40 mol%-, bevorzugt 1 bis 35 mol.-%, besonders bevorzugt 5 bis 30 mol.-%, Edelmetall und/oder Edelmetalloxid, und 0 bis 90 mol-% Ventilmetall und/oder Ventilmetalloxid, und 0 bis 90 mol-%, bevorzugt 0,01 bis 80 mol-% eines dotierten Nicht-Edelmetall-Oxids aufweist.

11. Elektrokatalysator gemäß einem der Ansprüche 1 bis 10, **dadurch gekennzeichnet, dass** der Katalysator 20 bis 70 mol-%, feinteiliges Nicht-Edelmetall-Oxid 5 bis 30 mol-%, Edelmetall und/oder Edelmetalloxid, und 10 bis 75 mol-% Ventilmetall und/oder Ventilmetalloxid und 0,1 bis 20 mol-% eines dotierten Nicht-Edelmetall-Oxids aufweist.

12. Elektrokatalytische Beschichtung, die mindestens einen Elektrokatalysator gemäß einem der Ansprüche 1 bis 11 umfasst.

13. Elektrode zur Herstellung von Chlor mittels Elektrolyse Chlor-Ionen enthaltender wässriger Elektrolyte mindestens bestehend aus einem elektrisch leitenden Träger und einer katalytisch wirkenden Beschichtung, **dadurch gekennzeichnet, dass** die katalytisch wirkende Beschichtung einen Elektrokatalysator gemäß einem der Ansprüche 1 bis 11 enthält.

14. Elektrode gemäß Anspruch 13, **dadurch gekennzeichnet, dass** der elektrisch leitende Träger aus einem Ventilmetall aus der Reihe: Titan, Zirkon, Wolfram, Tantal und Niob, bevorzugt aus Titan oder einer Titanlegierung gebildet ist.

15. Elektrode gemäß Anspruch 13 oder 14, **dadurch gekennzeichnet, dass** die Beladung der Elektrode von 0,1 bis 30 g Edelmetall / m² und 0,1 bis 75 g feinteiliges Nicht-Edelmetall-Oxid / m² beträgt.

16. Verfahren zur Herstellung von Elektroden zur Herstellung von Chlor gemäß einem der Ansprüche 13 bis 15, **dadurch gekennzeichnet, dass** auf den elektrisch leitenden Träger die katalytische Beschichtung aufgebracht wird, indem eine Mischung aus Nicht-Edelmetall-Oxid-Pulver, einem Lösungsmittel, und einer vorzugsweise im Lösungsmittel löslichen Edelmetallverbindung und einer löslichen Nicht-Edelmetallverbindung und gegebenenfalls einer löslichen Ventilmetallverbindung und/oder gegebenenfalls einer löslichen Dotierelement-Verbindung auf den elektrisch leitenden Träger aufgebracht und zur Entfernung von Lösemittel getrocknet und anschließend bei erhöhter Temperatur gesintert wird.

17. Elektrode nach einem der Ansprüche 13 bis 15, **dadurch gekennzeichnet, dass** diese nach einem Verfahren gemäß Anspruch 16 hergestellt ist.

18. Verwendung der Elektrode gemäß einem der Ansprüche 13 bis 15 oder 17 zur elektrochemischen Herstellung von Chlor aus Chlorwasserstoff- oder Alkalichloridlösungen, insbesondere aus Kochsalzlösungen oder zur Erzeugung elektrischen Stroms, bevorzugt in Brennstoffzellen und Batterien, in Redox-Kondensatoren, zur Elektrolyse von Wasser, zur Regenerierung von Chrombädern, oder bei Einsatz von fluorid-haltigen Elektrolyten bei der Wasserstoffperoxid-, Ozon- der Peroxodisulfat-Herstellung.

## Claims

1. Electrocatalyst for preparing chlorine by means of electrolysis of electrolytes containing chloride ions, which is based on at least one noble metal oxide and/or noble metal of transition group VIIIa of the Periodic Table of the Elements selected from the group consisting of: Ru, Rh, Pd, Os, Ir and Pt, **characterized in that** the catalyst additionally contains at least one finely divided pulverulent oxide of another metal, base metal oxide powder, where the base metal oxide powder is chemically stable in the presence of aqueous electrolytes, may optionally be doped with a doping element and has an electrically conductive matrix of noble metal oxide and/or noble metal with valve metal oxide and/or valve metal and/or doped base metal oxide in which the finely divided, optionally doped base metal oxide powder is embedded, where the average particle diameter of the particles of the base metal oxide powder is from 5 to 800 nm and where the base metal oxide of the base metal oxide powder comprises one or more oxides and/or mixed oxides from the group consisting of: titanium oxide, tin oxide, niobium oxide, tantalum oxide, vanadium oxide, germanium oxide, tellurium oxide, lead oxide, manganese oxide, iron antimony oxide or molybdenum oxide.

2. Electrocatalyst according to Claim 1, **characterized in that** one or more of the group consisting of: ruthenium, iridium, platinum, palladium and oxides thereof is/are selected as noble metal or noble metal oxide.

3. Electrocatalyst according to Claim 2, **characterized in that** one or more of ruthenium and iridium or ruthenium oxide and iridium oxide is/are selected as noble metal or noble metal oxide.

4. Electrocatalyst according to any of Claims 1 to 3, **characterized in that** the average particle diameter of the particles of base metal oxide powder is from 10 to 600 nm.

5. Electrocatalyst according to any of Claims 1 to 4, **characterized in that** the base metal oxide of the base metal oxide powder comprises titanium oxide and/or tin oxide.

6. Electrocatalyst according to any of Claims 1 to 5, **characterized in that** the base metal oxide powder comprises both particles having approximately spherical symmetry and fibrous particles.

7. Electrocatalyst according to Claim 6, **characterized in that** the base metal oxide powder comprises fibrous particles having an average length, main extension of the fibre, of up to 100 µm, preferably up to 50 µm, particularly preferably up to 20 µm.

8. Electrocatalyst according to any of Claims 1 to 7, **characterized in that** the specific surface area of the base metal oxide powder determined by means of nitrogen adsorption using the multipoint BET method at -196°C analogously to DIN ISO 9277 is from 0.5 m²/g to 500 m²/g, preferably from 1.0 m²/g to 300 m²/g, particularly preferably from 2.0 m²/g to 150 m²/g.

9. Electrocatalyst according to any of Claims 1 to 8, **characterized in that** the base metal oxide of the base metal oxide powder is doped with one or more doping elements from the group consisting of: antimony, niobium, tantalum, iridium and fluorine, the proportion of which is preferably from 0.0001 to 0.1 mol of doping element per mol of the total of the other metals present in the base metal oxide.

10. Electrocatalyst according to any of Claims 1 to 9, **characterized in that** the catalyst comprises from 1 to 90 mol%, preferably from 5 to 80 mol%, particularly preferably from 20 to 70 mol%, of finely divided base metal oxide powder and from 0.05 to 40 mol%, preferably from 1 to 35 mol%, particularly preferably from 5 to 30 mol%, of noble metal and/or noble metal oxide and from 0 to 90 mol% of valve metal and/or valve metal oxide, and from 0 to 90 mol%, preferably from 0.01 to 80 mol%, of a doped base metal oxide.

11. Electrocatalyst according to any of Claims 1 to 10, **characterized in that** the catalyst comprises from 20 to 70 mol% of finely divided base metal oxide, from 5 to 30 mol% of noble metal and/or noble metal oxide and from 10 to 75 mol% of valve metal and/or valve metal oxide and from 0.1 to 20 mol% of a doped base metal oxide.

12. Electrocatalytic coating comprising at least one electrocatalyst according to any of Claims 1 to 11.

13. Electrode for preparing chlorine by means of electrolysis of aqueous electrolytes containing chloride ions, which consists at least of an electrically conductive support and a catalytically active coating, **characterized in that** the .catalytically active coating contains an electrocatalyst according to any of Claims 1 to 11.

14. Electrode according to Claim 13, **characterized in that** the electrically conductive support is formed by a valve metal from the group consisting of: titanium, zirconium, tungsten, tantalum and niobium, preferably by titanium or a titanium alloy.

15. Electrode according to Claim 13 or 14, **characterized in that** the loading of the electrode is from 0.1 to 30 g of noble metal/ m² and from 0.1 to 75 g of finely divided base metal oxide/m².

16. Process for producing electrodes for preparing chlorine according to any of Claims 13 to 15, **characterized in that** the catalytic coating is applied to the electrically conductive support, by applying a mixture of base metal oxide powder, a solvent and a noble metal compound which is preferably soluble in the solvent and a soluble base metal compound and optionally a soluble valve metal compound and/or optionally a soluble doping element compound to the electrically conductive support and drying to remove solvent and subsequently sintering at elevated temperature.

17. Electrode according to any of Claims 13 to 15, **characterized in that** it has been produced by a process according to Claim 16.

18. Use of the electrode according to any of Claims 13 to 15 or 17 for the electrochemical preparation of chlorine from hydrogen chloride solutions or alkali metal chloride solutions, in particular from sodium chloride solutions, or for generating electric current, preferably in fuel cells and batteries, in redox capacitors, in the electrolysis of water, the regeneration of chromium baths, or in the use of fluoride-containing electrolytes in hydrogen peroxide, ozone or peroxodisulphate production.

## Revendications

1. Électrocatalyseur pour la fabrication de chlore par électrolyse d'électrolytes contenant des ions chlore, à base d'au moins un oxyde de métal noble et/ou d'un métal noble du groupe de transition VIIIa du tableau périodique des éléments choisi dans la série constituée par : Ru, Rh, Pd, Os, Ir, Pt, **caractérisé en ce que** le catalyseur contient en outre au moins un oxyde en poudre finement divisé d'un autre métal, une poudre d'oxyde de métal non noble, la poudre d'oxyde de métal non noble étant résistante chimiquement en présence d'électrolytes aqueux, pouvant éventuellement être dopée avec un élément dopant et comprenant une matrice électriquement conductrice d'oxyde de métal noble et/ou de métal noble avec un oxyde de métal à effet de valve et/ou un métal à effet de valve et/ou un oxyde de métal non noble dopé, dans laquelle la poudre d'oxyde de métal non noble éventuellement dopée finement divisée est incorporée, le diamètre de particule moyen des particules de la poudre d'oxyde de métal non noble étant de 5 à 800 nm, et l'oxyde de métal non noble de la poudre d'oxyde de métal non noble comprenant un ou plusieurs oxydes et/ou oxydes mixtes de la série constituée par : l'oxyde de titane, l'oxyde d'étain, l'oxyde de niobium, l'oxyde de tantale, l'oxyde de vanadium, l'oxyde de germanium, l'oxyde de tellure, l'oxyde de plomb, l'oxyde de manganèse, l'oxyde de fer-antimoine ou l'oxyde de molybdène.

2. Électrocatalyseur selon la revendication 1, **caractérisé en ce qu'**un ou plusieurs éléments de la série constituée par : le ruthénium, l'iridium, le platine, le palladium et leurs oxydes sont choisis en tant que métal noble ou oxyde de métal noble.

3. Électrocatalyseur selon la revendication 2, **caractérisé en ce qu'**un ou plusieurs éléments parmi le ruthénium et l'iridium ou l'oxyde de ruthénium et l'oxyde d'iridium sont choisis en tant que métal noble ou oxyde de métal noble.

4. Électrocatalyseur selon l'une quelconque des revendications 1 à 3, **caractérisé en ce que** le diamètre de particule moyen des particules de la poudre d'oxyde de métal non noble est de 10 à 600 nm.

5. Électrocatalyseur selon l'une quelconque des revendications 1 à 4, **caractérisé en ce que** l'oxyde de métal non noble de la poudre d'oxyde de métal non noble comprend de l'oxyde de titane et/ou de l'oxyde d'étain.

6. Électrocatalyseur selon l'une quelconque des revendications 1 à 5, **caractérisé en ce que** la poudre d'oxyde de métal non noble comprend aussi bien des particules ayant une symétrie presque sphérique que des particules en forme de fibres.

7. Électrocatalyseur selon la revendication 6, **caractérisé en ce que** la poudre d'oxyde de métal non noble comprend des particules en forme de fibres, qui présentent une longueur moyenne, dimension principale des fibres, de jusqu'à 100 µm, de préférence de jusqu'à 50 µm, de manière particulièrement préférée de jusqu'à 20 µm.

8. Électrocatalyseur selon l'une quelconque des revendications 1 à 7, **caractérisé en ce que** la surface spécifique de la poudre d'oxyde de métal non noble, déterminée par adsorption d'azote selon la méthode BET à plusieurs points à -196 °C selon DIN ISO 9277, est de 0,5 m²/g à 500 m²/g, de préférence de 1,0 m²/g à 300 m²/g, de manière particulièrement préférée de 2,0 m²/g à 150 m²/g.

9. Électrocatalyseur selon l'une quelconque des revendications 1 à 8, **caractérisé en ce que** l'oxyde de métal non noble de la poudre d'oxyde de métal non noble est dopé avec un ou plusieurs éléments dopants de la série constituée par : l'antimoine, le niobium, le tantale, l'iridium et le fluor, dont la proportion est de préférence de 0,0001 à 0,1 mole d'élément dopant par mole de la somme des autres métaux contenus dans l'oxyde de métal non noble.

10. Électrocatalyseur selon l'une quelconque des revendications 1 à 9, **caractérisé en ce que** le catalyseur comprend 1 à 90 % en moles, de préférence 5 à 80 % en moles, de manière particulièrement préférée 20 à 70 % en moles, de poudre d'oxyde de métal non noble finement divisée et 0,05 à 40 % en moles, de préférence 1 à 35 % en moles, de manière particulièrement préférée 5 à 30 % en moles, de métal noble et/ou d'oxyde de métal noble, et 0 à 90 % en moles de métal à effet de valve et/ou d'oxyde de métal à effet de valve, et 0 à 90 % en moles, de préférence 0,01 à 80 % en moles d'un oxyde de métal non noble dopé.

11. Électrocatalyseur selon l'une quelconque des revendications 1 à 10, **caractérisé en ce que** le catalyseur comprend 20 à 70 % en moles d'oxyde de métal non noble finement divisé, 5 à 30 % en moles de métal noble et/ou d'oxyde de métal noble, et 10 à 75 % en moles de métal à effet de valve et/ou d'oxyde de métal à effet de valve, et 0,1 à 20 % en moles d'un oxyde de métal non noble dopé.

12. Revêtement électrocatalytique, qui comprend au moins un électrocatalyseur selon l'une quelconque des revendications 1 à 11.

13. Électrode pour la fabrication de chlore par électrolyse d'électrolytes aqueux contenant des ions chlore, au moins constituée par un support électriquement conducteur et un revêtement à effet catalytique, **caractérisée en ce que** le revêtement à effet catalytique contient un électrocatalyseur selon l'une quelconque des revendications 1 à 11.

14. Électrode selon la revendication 13, **caractérisée en ce que** le support électriquement conducteur est formé par un métal à effet de valve de la série constituée par : le titane, le zirconium, le tungstène, le tantale et le niobium, de préférence du titane ou un alliage de titane.

15. Électrode selon la revendication 13 ou 14, **caractérisée en ce que** le chargement de l'électrode est de 0,1 à 30 g de métal noble/m² et 0,1 à 75 g d'oxyde de métal non noble finement divisé/m².

16. Procédé de fabrication d'électrodes pour la fabrication de chlore selon l'une quelconque des revendications 13 à 15, **caractérisé en ce que** le revêtement catalytique est appliqué sur le support électriquement conducteur par application d'un mélange d'une poudre d'oxyde de métal non noble, d'un solvant et d'un composé de métal noble de préférence soluble dans le solvant et d'un composé de métal non noble soluble et éventuellement d'un composé de métal à effet de valve soluble et/ou éventuellement d'un composé d'élément dopant soluble sur le support électriquement conducteur, et séchage pour l'élimination du solvant, puis frittage à température élevée.

17. Électrode selon l'une quelconque des revendications 13 à 15, **caractérisée en ce que** celle-ci est fabriquée par un procédé selon la revendication 16.

18. Utilisation de l'électrode selon l'une quelconque des revendications 13 à 15 ou 17 pour la fabrication électrochimique de chlore à partir de solutions de chlorure d'hydrogène ou de chlorure alcalin, notamment à partir de solutions de sel de cuisine, ou pour la génération d'un courant électrique, de préférence dans des piles à combustible et des batteries, dans des condensateurs redox, pour l'électrolyse d'eau, pour la régénération de bains de chrome, ou lors de l'utilisation d'électrolytes contenant du fluor lors de la fabrication de peroxyde d'hydrogène, d'ozone ou de peroxodisulfate.
